# EUROPÄISCHE PATENTANMELDUNG

(11) **EP 2 620 204 A2**
(43) Veröffentlichungstag der Anmeldung: **31.07.2013**
(21) Anmeldenummer: 13152650.1
(22) Anmeldetag: 25.01.2013
(51) Int. Cl.: B01D 46/52

(54) **Filtersystem**

(30) Priorität: 27.01.2012 AT 1082012
(71) Anmelder: IFT GmbH, 6200 Jenbach (AT)
(72) Erfinder: Mauracher, Walter, 6280 Rohrberg (AT); Gruber, Christoph, 6283 Hippach (AT)
(74) Vertreter: Schwarz & Partner

(57) **Zusammenfassung**

Filtersystem, umfassend zumindest zwei Filterlagen (2), die sich zumindest bereichsweise überlappen, wobei die Filterlagen (2) aus zumindest einer Filterschicht (1) bestehen, welche Fasermaterial umfasst, wobei zwischen den Filterlagen (2) im Überlappungsbereich (14) wenigstens ein formstabiler poröser Körper (7, 8), der offenporig ausgebildet ist, eingebracht ist.

## Beschreibung

Die Erfindung betrifft ein Filtersystem, umfassend zumindest zwei Filterlagen, die sich zumindest bereichsweise überlappen, wobei die Filterlagen aus zumindest einer Filterschicht bestehen, welche Fasermaterial umfasst.

Filtersysteme der vorgenannten Art weisen Filterlagen auf, die aus einer oder mehrerer Filterschichten aus Fasermaterial gleicher oder unterschiedlicher Art oder Konsistenz bestehen, in denen die Filterung bzw. Abtrennung von festen oder flüssigen Partikeln bzw. Schwebestoffen aus Stoffströmen erfolgt. Derartige Faserfilterschichten weisen oft ein sehr feines Fasergewirk auf. Bei der Filterung wird der zu filternde bzw. zu reinigende Stoffstrom durch die Filterlagen geleitet und während der Stoffstrom die Filterlagen passiert, bleiben die Partikel bzw. Schwebestoffe in den Filterlagen hängen.

Je dichter die Filamente im Fasergewirk gepackt sind, desto höher ist die Abscheiderate, insbesondere in Bezug auf sehr kleine Partikelgrößen. Die gegenständliche Erfindung richtet sich vorzugsweise auf jene Filtertechniken, wo die Filterschichten des Filtereinsatzes sehr dicht gepackte Faserfilamente und dementsprechend kleine Poren und Öffnungen aufweisen. Meist sind die aus Faserfilterschichten bestehenden Filterlagen sehr dünn ausgeführt, sodass man von Filterpapieren spricht. Über die Einsatzzeit des Filtersystems werden die Poren und Öffnungen der Filterschichten der Filterlagen zunehmend durch das Filtrat gefüllt bzw. verschlossen, sodass der Druckabfall über die Filterlagen progressiv ansteigt. Wenn dieser Druckabfall einen vordefinierten Grenzwert übersteigt, muss das Filtersystem bzw. der die Filterlagen beinhaltende Filtereinsatz gewechselt werden. Um möglichst hohe Standzeiten für den Filter bzw. den Filtereinsatz zu erreichen, ist eine große Aufnahmekapazität der Filterlagen erforderlich. Dies wird durch den Einsatz großer Filterflächen, worunter die gesamte anströmseitige Oberfläche der Filterschichten des Filtersystems zu verstehen ist, realisiert.

Da die Durchströmgeschwindigkeit des Mediums umgekehrt proportional zur Filterflächenzunahme abnimmt, kann damit sowohl der Druckabfall als auch der zeitliche Zustrom des Filtrates auf die Filterlagen reduziert und die Standzeit entsprechend gesteigert werden. Insgesamt können damit in den meisten Fällen akzeptable Standzeiten erreicht werden.

Zur Minimierung des Platzbedarfes wird bei einer dünnen Filterschicht (z.B. aus Filterpapier) oder einem dünnen Verbund an Filterschichten durch Falten der Filterschicht oder des Verbunds an Filterschichten ein Filtersystem mit zumindest zwei (meist jedoch einer Vielzahl an) Filterlagen erzeugt. Die Filterlagen können dabei z.B. in Form von Faltenbälgen in zylindrischen Halte- oder Einsatzkörben integriert sein. Durch das Falten einer einzelnen Filterschicht oder eines Verbunds an Filterschichten entsteht eine Vielzahl an Filterlagen, die sich teilweise überlappen. Solche Filterlagen bezeichnet man auch als Filterfaltenlagen, die aus einer Filterschicht oder einem Verbund an Filterschichten bestehen.

Das den zuvor beschriebenen Filtersystemen anhaftende Problem besteht häufig darin, dass die dünnlagig ausgeführten Filterlagen meist keine ausreichend hohe Eigensteifigkeit besitzen und daher entweder durch Harze versteift bzw. durch perforierte biegesteife Kunststofffolien, Metallbleche oder Gitter gestützt werden müssen, damit der mit zunehmender Einsatzzeit ansteigende Druck auf die Filterfläche nicht dazu führt, dass in Strömungsrichtung benachbarte Filterlagen bzw. Filterfaltenlagen zur Anlage gebracht werden, womit ein großer Teil der Filterfläche für die Durchströmung verloren geht.

Dem vorliegenden Lösungsvorschlag liegt die Aufgabenstellung zugrunde, die Abstützung der Filterlagen auf eine alternative Art und Weise zu lösen, wobei im Gegensatz zum Stand der Technik auch geringe Filterlagenabstände und bei Filterfaltenlagen auch breite Falten und geringe Abstände zwischen den Filterfaltenlagen eingesetzt werden können und wobei hohe zulässige Druckdifferenzen über die Filterlage die Kanalbreite zwischen den einzelnen Filterflächen nicht verringert werden, sodass insgesamt die Behinderung des Stoffstromes sehr gering bleibt. Weiters soll die Erfindung die Aufgabe lösen, dass Faltenbälge mit sehr geringen Faltenabständen und extremen Verhältniszahlen von Faltenbreite zu Faltenabstand realisiert und in der Folge sehr große Filterflächen innerhalb des, in der Regel begrenzten, zur Verfügung stehenden Platzangebotes bzw. Gehäusevolumens untergebracht werden können.

Diese Aufgabe wird durch ein Filtersystem, umfassend zumindest zwei Filterlagen, die sich zumindest bereichsweise überlappen, wobei die Filterlagen aus zumindest einer Filterschicht bestehen, welche Fasermaterial umfasst, gelöst, indem zwischen den Filterlagen im Überlappungsbereich wenigstens ein formstabiler poröser Körper eingebracht ist, der offenporig ausgebildet ist.

Filterlagen aus einem Fasermaterial sind bei Druckbeaufschlagung durch das zu filternde Material in sich nicht formstabil und müssen, wie bereits zum Stand der Technik ausgeführt, durch Stützelemente gehalten werden, sodass die Filterlagen unter der Druckwirkung des Stoffstromes nicht gegeneinander gepresst werden. Durch das Einbringen eines formstabilen offenporigen Körpers im Überlappungsbereich der beiden Filterlagen wird die verhindert. Ein formstabiler poröser Körper ist dabei ein solcher, der porös ist, d.h., dass die Rohdichte des Körpers niedriger ist als die tatsächliche Dichte (= Reindichte) des Körpers und der folglich Poren aufweist; gleichzeitig ändert der Körper bei den im Filter herrschenden Druckverhältnissen seine Form nicht oder nur minimal. Offenporig in diesem Zusammenhang bedeutet, dass die Poren untereinander und mit der Umgebung in Verbindung stehen und damit für Fluide durchlässig sind. Durch eine solche Ausgestaltung ist es möglich, den Filter so zu gestalten, dass der formstabile poröse Körper den Druckabfall über das Filtersystem nur geringfügig oder gar nicht erhöht, gleichzeitig aber die Struktur der Filterlagen erhalten bleiben. Die genannten Filterlagen und der oder die formstabile(n) poröse(n) Körper bilden zusammen auch einen sogenannten Feinfilter oder einen Teil eines Feinfilters.

In einer Ausführungsvariante kann vorgesehen sein, dass der formstabile poröse Körper derart ausgebildet ist, dass der Druckverlust bei Druckbeaufschlagung mit dem zu filternden Medium bei Integration der formstabilen porösen Körper nicht mehr als 10%, vorzugsweise nicht mehr als 5% im Vergleich zum Filtersystem ohne die formstabilen porösen Körper beträgt. Mit dieser Maßnahme wird der Druckabfall nicht mehr durch den formstabilen porösen Körper bestimmt, sondern durch die Filterlagen.

Weiters kann vorgesehen sein, dass die mittlere Porengröße des formstabilen porösen Körpers um zumindest 100%, vorzugsweise um 100 - 500 %, größer als die mittlere Porengröße der Poren des Fasermaterials der Filterschicht oder des Verbunds der Filterschichten der Filterlage ist. Unter mittlerer Porengröße wird dabei das arithmetische Mittel der Porendurchmesser verstanden.

In einer weiteren Ausführungsvariante kann vorgesehen sein, dass der stromaufwärts der Filterlage befindliche formstabile poröse Körper entlang der Strömungsrichtung des zu filternden Mediums eine inhomogene Porigkeit aufweist, wobei bevorzugt die mittlere Porengröße an der der stromaufwärts gelegenen Begrenzungsfläche des formstabilen porösen Körpers eine mittlere Porengröße von 300 - 400 % der Porengröße der Filterlage und an der stromabwärts gelegenen Begrenzungsfläche eine mittlere Porengröße von 120 - 160 % der Porengröße der Filterlage aufweist. Durch eine solche Ausgestaltung kann der Druckabfall auf die Filterleistung der Filterlagen hin optimiert und gleichzeitig eine tiefenwirkende Vorabscheidung erreicht werden. Der stromabwärts befindliche formstabile poröse Körper kann hingegen eine konstante mittlere Porengröße aufweisen, vorzugsweise von zumindest 200% der mittleren Porengröße der Filterlagen.

Dabei kann weiters vorgesehen sein, dass die Abnahme der Porengröße von der stromaufwärts gelegenen Begrenzungsfläche zur stromabwärts gelegenen Begrenzungsfläche stetig, vorzugsweise linear, erfolgt.

In einer bevorzugten Ausführungsvariante kann vorgesehen sein, dass mehrere Filterlagen durch Falten einer Filterschicht oder eines Verbunds and Filterschichten zu Filterfaltenlagen gebildet sind. Dabei handelt es sich beispielsweise um sogenannte Faltenbälge (Faltenbalggeometrien). Die Filterschicht bzw. der Verbund an Filterschichten bildet dabei mehrere Filterlagen aus. Eine klassische Variante wäre dabei die, dass die Filterschicht als Faltenbalg ausgebildet ist. Die Faltenlagen können aus einer endlosen Filterschicht oder einem endlosen Verbund an Filterschichten gebildet werden. Alternativ dazu oder in Kombination können auch mehrere Filterschichten und/oder mehrere Verbunde an Filterschichten, die zumindest zwei Filterlagen bilden.

In einer weiteren Ausführungsvariante kann vorgesehen sein, dass die Filterlagen in einer im Wesentlichen ebenen Plattenstruktur geschichtet aufgebaut sind und die Anströmung und die Abströmung tangential zur Richtung der Plattenstruktur erfolgt, wobei die Strömungsrichtung des Stoffstroms vor der Filterlage zu Strömungsrichtung nach der Filterlage einen Winkelversatz von zumindest 30°, vorzugsweise größer 60°, aufweist, wobei die Filterlagen durch formstabile offenporige Körper auf einem konstanten Abstand gehalten werden.

Weiters kann vorgesehen sein, dass die Filterlagen im Wesentlichen parallel zur Strömungsrichtung des Stoffstroms ausgerichtet sind, wobei die Breite der formstabilen offenporigen Körper etwa den zweifachen bis vierfachen Wert des Filterlagenabstands beträgt.

Filter können aufgrund ihrer Ausgestaltung unterteilt werden. Dazu bedient man sich der sog. Filterkenngröße. Eine wichtige Filterkenngröße (nachfolgend mit K bezeichnet) bei gefalteten Filterlagen, ist definiert durch das Verhältnis von der Filterfaltenbreite (B) zu Filterfaltenabstand (A): K = B / A. Der Filterfaltenabstand A ist dabei gleichzusetzen mit dem Filterlagenabstand.

In einer Ausführungsvariante kann vorgesehen sein, dass die Filterkenngröße K einen Wert größer als 10, vorzugsweise größer als 20 aufweist. Dies hat den Vorteil einer hohen Filterleistung mit großer Filteroberfläche bei gleichzeitig sehr kompakter Bauweise.

Allen Ausführungsvarianten gemeinsam ist, dass weiters ein Vorfilter vorgesehen sein kann, welcher in Strömungsrichtung stromaufwärts der Filterlagen angeordnet ist. Ein solcher Vorfilter erhöht die Standzeit des Feinfilters. Bevorzugt kann dabei vorgesehen sein, dass der Vorfilter stirnseitig zu Faltenkanten am Eintritt zu den Filterlagen angeordnet ist.

In einer Ausführungsvariante kann vorgesehen sein, dass die Filterlagen im Wesentlichen senkrecht innerhalb eines Filtergehäuses ausgerichtet sind.

Für eine optimale Filterwirkung kann weiters vorgesehen werden, dass wenigstens zwei formstabile poröse Körper in Strömungsrichtung des Stoffstromes zueinander zumindest abschnittsweise einen Überdeckungsbereich aufweisen, wobei die wenigstens zwei formstabilen porösen Körper durch eine Filterlage voneinander getrennt werden.

Bevorzugt ist die Orientierung der formstabilen porösen Körper so gewählt, dass sie mit der größten Flächenausdehnung im Wesentlichen parallel zur bzw. entlang der Strömungsrichtung des Stoffstromes angeordnet sind.

Weitere Vorteile und Details der Erfindung ergeben sich anhand der Figuren und Figurenbeschreibungen.
Fig. 1 zeigt einen Ausschnitt eines Filtersystems nach Stand der Technik.
Fig. 2 zeigt einen Ausschnitt eines erfindungsgemäßen Filtersystems.
Fig. 3 zeigt einen Ausschnitt eines weiteren erfindungsgemäßen Filtersystems.
Fig. 4 zeigt den Ausschnitt des Filtersystems aus Fig. 3 im Schrägriss in einer möglichen Abwandlung.
Fig. 5 zeigt einen Ausschnitt eines erfindungsgemäßen Filtersystems.
Fig. 6 zeigt einen Ausschnitt eines weiteren erfindungsgemäßen Filtersystems.

Die Erfindung beruht auf der Erkenntnis, dass anstatt der nach dem Stand der Technik eingesetzten Stützfläche, ein formstabiler poröser Körper mit offenen Poren als Abstandhalter zwischen den Falterlagen beispielsweise bei Faltenbälgen eingesetzt wird. Solche formstabile poröse Körper bestehen beispielsweise aus Kunststoffen, aus Keramiken oder auch aus Metall und sind im Handel relativ kostengünstig in den verschiedensten Strukturen und Ausführungen erhältlich. Vorzugsweise werden für den vorgeschlagenen Lösungsweg solche formstabile poröse Körper eingesetzt, deren Kavitäten bzw. Poren zu einem sehr hohen Prozentsatz (größer als 90%) offen sind und deren Festmasse nur max. ca. 10 % des Volumens beträgt. Dadurch ist der Druckverlust bei Durchströmung des Schaumkörpers sehr gering trotz ausreichend hoher Kompressionssteifigkeit. Auf diese Weise kann der Stoffstrom durch diese formstabilen porösen Körper zur Filterlage hin bzw. von der Filterlage abgeführt werden, ohne dass der Gesamtdruckabfall über das Filtersystem dadurch nennenswert ansteigt.

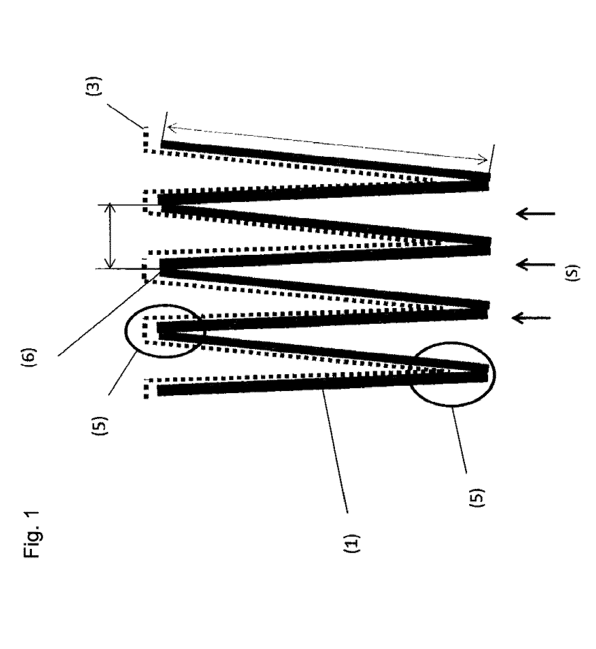

Fig. 1 zeigt einen Ausschnitt aus einem typischen Filtersystem in Form eines Feinfilters nach Stand der Technik. Eine Filterschicht 1 ist gefaltet und bildet so insgesamt acht Filterlagen 2 - genauer gesagt Filterfaltenlagen 2 - die eine Faltenbreite B aufweisen. Der Stoffstrom S des zu filternden Mediums ist durch die Pfeile angezeigt. Auf der Abströmseite der Filterlagen 2 befindet sich ein Stützgitter 3, auf dem die Filterlagen 2 aufliegen und welches die Filterlagen 2 bei Druckwirkung abstützt. Der Filterfaltenabstand A zeigt die Distanz zweier Filterlagen 2 bzw. Filterfalterlagen 2 an. Das Verhältnis von Filterfaltenbreite B zu Filterfaltenabstand A entspricht der Filterkenngröße K und wird ausgedrückt in K = B/A.

Zur Erzielung einer maximalen Leistungsfähigkeit des Filtersystems strebt man möglichst hohe Werte für die Filterkenngröße (K) an.

Je größer die Filterfaltenbreite (B) sowie der auf die Filterfläche wirkende Druck ist, desto biegesteifer muss das Stützgitter 3 ausgeführt sein, um eine Verwölbung der Filterflächen und in der Folge ein partielles Anliegen von benachbarten Filterlagen 2 oder eine Verengung des Strömungskanals zu vermeiden. Die Dicke s des Stützgitters 3 kann jedoch ebenfalls zu einer nicht unerheblichen Versperrung des Strömungspfades führen, darüber hinaus erweisen sich steife Stützgitter 3 bei der Herstellung von Filterlagen 2 in Form Folg Faltenbalgfiltern als Erschwernis. Die Filterkenngröße (K) kann bei Stützblech- oder Stützgitterausführungen deshalb einen bestimmten, Konzept- oder Ausführungsbedingten Grenzwert nicht übersteigen.

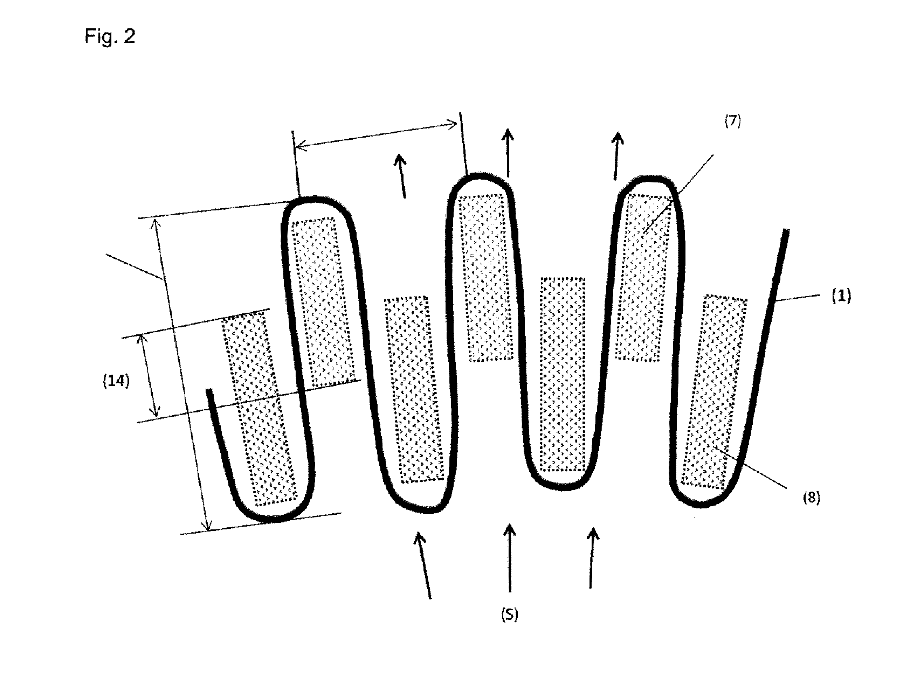

In Fig. 2 ist ein erfindungsgemäßes Filtersystem in Form eines Feinfilters gezeigt. An dieser Stelle sei angemerkt, dass gleiche Bezugszeichen in allen Figuren sich auf gleiche Bauteile beziehen, sodass davon abgesehen wird, dass bei jeder einzelnen Figur alle Bauteile erneut beschrieben werden.

Eine Filterschicht 1 ist ähnlich wie bei Fig. 1 streifenförmig zu Filterlagen 2 gefaltet. Anstelle der einzelnen Filterschicht 1 kann diese auch aus einem Verbund an Filterschichten 1 bestehen, wenn dies für die Filterleistung gewünscht oder vorteilhaft ist. Die Filterschicht 1 (oder der Verbund an Filterschichten 1) könnte endlos ausgebildet sein, woraus sich eine zylindermantelförmige Ausgestaltung der Filterlagen in Form eines Faltenbalgs ergeben würde. Zwischen den Filterlagen 2 sind formstabile poröse Körper 7, 8 in Streifenform angeordnet, welche die gegenseitige Abstandshaltung gegenüberliegender Filterlagen 2 gewährleisten. Für eine optimale Filterwirkung ist bevorzugt vorgesehen, dass die formstabilen porösen Körper 7, 8 zumindest abschnittsweise einen Überdeckungsbereich 14 aufweisen. Dies bedeutet, dass ein formstabiler poröser Körper 7 im Verhältnis zu einem weiteren formstabilen porösen Körper 8 versetzt angeordnet ist und wenigstens teilweise flächendeckend zum ersten formstabilen porösen Körper 7 angeordnet ist. Im gezeigten Ausführungsbeispiel erstreckt sich die Überdeckung 14 im Wesentlichen parallel zur bzw. entlang der Strömungsrichtung des Stoffstromes S. Der Stoffstrom S durchströmt sowohl die Filterlagen 2 der Filterschicht 1 als auch die formstabilen porösen Körper 7, 8, wobei die formstabilen porösen Körper 7, 8, wie bereits festgestellt, aufgrund der hohen Porosität die Strömung des Stoffstroms S nur unwesentlich behindern. Bevorzugt ist die Orientierung der formstabilen porösen Körper 7, 8 so gewählt, dass sie mit der größten Flächenausdehnung im Wesentlichen parallel zur bzw. entlang der Strömungsrichtung des Stoffstroms S angeordnet sind. Die Filterfaltenbreite B kann damit sehr groß und der Filterfaltenabstand A sehr klein gewählt werden, ohne dass Gefahr besteht, dass die Filterlagen 2 unter Druckwirkung zur Anlage kommen oder der Abstand zwischen den Filterlagen 2 unzulässig gering wird.

Die Gestaltung der formstabilen porösen Körper 7, 8 lässt sowohl seitens der Geometrie als auch der Struktur und des Materials viele Freiheiten offen, die für spezielle Anwendungsfälle vorteilhaft genützt werden können. Beispielsweise kann auf der Zuströmseite die Struktur des formstabilen porösen Körpers 7, 8 so gewählt werden, dass eine Vorfilterwirkung erzielt und die Oberflächenbelastung der Filterschicht 1 damit reduziert wird. Dies kann z.B. dadurch erreicht werden, dass der zuströmseitige formstabile poröse Körper 7, 8 eine spezielle und vorteilhaft variable Porigkeit aufweist. Günstig hat sich dabei eine mittlere Porosität des formstabilen porösen Körpers 7, 8 erwiesen, der um etwa 100 - 500 % größer ist, als die mittlere Porosität der Filterschicht 1. Ebenso hat es sich als sehr günstig erwiesen, die mittlere Porengröße des zuströmseitigen formstabilen porösen Körpers 7, 8 von der einströmenden Oberfläche zur ausströmenden Oberfläche, auf der die aufliegt, stetig zu verkleinern. Die formstabilen porösen Körper 7, 8 auf der Abströmseite des Feinfilters haben im Unterschied zu den anströmseitigen formstabilen porösen Körpern 7, 8 primär die Funktion der Distanzhaltung der Faltenflächen bzw. Filterlagen 2, sodass hier das wichtigste Auswahlkriterium für die formstabilen porösen Körper 7, 8 darin besteht, eine ausreichend hohe Formsteifigkeit bei minimalem Druckverlust zu gewährleisten. Man könnte hier vorteilhafterweise also eine möglichst große Porigkeit wählen.

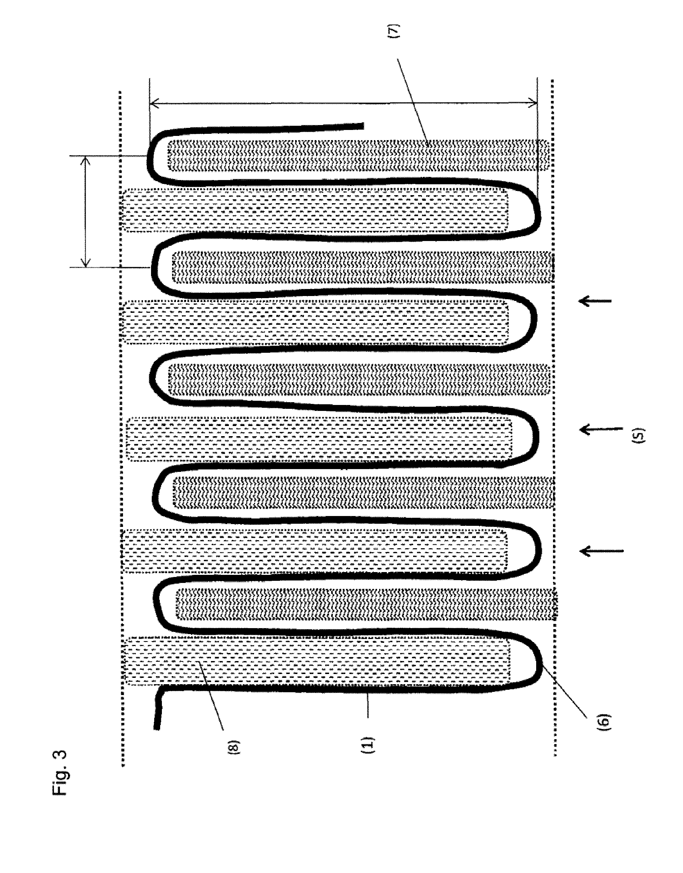

In Fig. 3 ist ein Ausführungsbeispiel eines erfindungsgemäßen Filtersystems auf Basis von streifenförmigen oder plattenförmigen formstabilen porösen Körpern 7, 8 gezeigt. Es ist ersichtlich, dass auf diese Weise sehr breite Falten (große Filterfaltenbreite B) und damit sehr große Filterflächen auf kleinem Raum verwirklicht werden können. Die vorgeschlagene Methode ermöglicht eine extrem stabile, gegenseitige Abstützung der Filterlagen 2 der Faltenbälge. Daneben eignen sich auf diese Art und Weise ausgeführte Filtersysteme auch zur Abreinigung durch Rückspülung, wenn es beim Filtrat um Feststoffe handelt. Da mit der Abstützmethode durch offenporige formstabile poröse Körper 7, 8 sehr große Filterfaltenbreiten B gut beherrschbar werden, können damit auch auf einfache Weise Filterdesigns realisiert werden, die für bestimmte Anwendungsfälle günstiger sind, als zylindermantelförmige Faltenbälge, beispielsweise würfel- oder prismenförmige, da hier extrem große aktive Filterflächen auf kleinstem Raum untergebracht werden können.

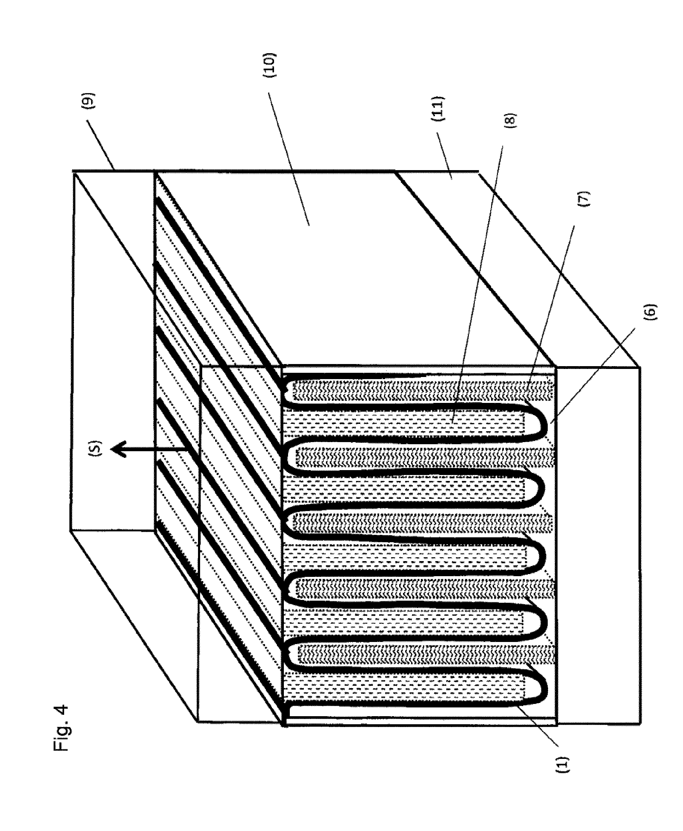

In Fig. 4 ist eine mögliche Ausgestaltung des Beispiels der Fig. 3 beispielhaft dargestellt. Dabei ist eine ebenflächige Filteranordnung in einem quaderförmigen Filterkasten dargestellt. Die Anströmung der Filterlagen 2 der Filterschicht 1 erfolgt dabei günstiger Weise senkrecht auf die Faltenkanten 6. In der Zeichnung strömt der zu filternde Stoffstrom im Zustrom-Gehäuseteil 11 auf die Filterpackung und durch den gegenüberliegenden Abstrom-Gehäuseteil 9 aus dem Filterkasten heraus. Stirnseitig ist der Filterkasten beispielsweise durch (nicht dargestellte) Vergussmassen verschlossen. Es ist bereits optisch gut einsichtig, dass eine maximale Filterfläche innerhalb des Gehäusevolumens untergebracht werden kann.

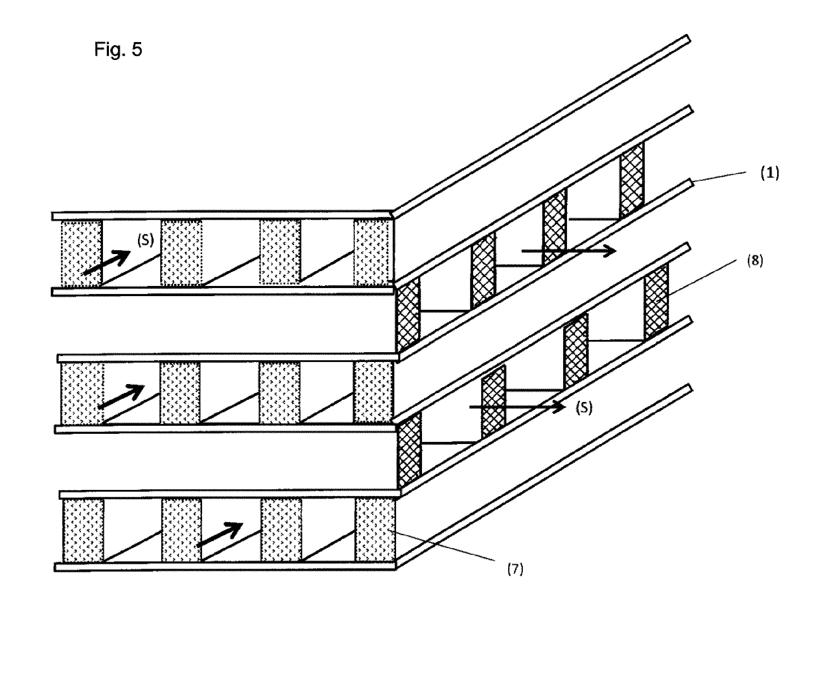

Fig. 5 offenbart ein bevorzugtes Ausführungsbeispiel eines Filtersystems in Form eines Feinfilters. Die Stützelemente bestehen aus formstabilen porösen Körpern 7, 8 für ebene Filterlagen 2 bei z.B. kastenförmiger Filterbauweise. Die Stützelemente bestehen hier aus Streifen aus formstabilen porösen Körpern 7, 8, die kreuzweise zu den Filterlagen 2 der benachbarten Ebenen gelegt und die voneinander beabstandet sind. Die Strömungsrichtungen des Stoffstromes innerhalb der Filterebenen sind für zu- und abströmende Bereiche verschieden, wobei der Winkel zwischen den Strömungsrichtungen vorzugsweise größer als 30° ist. Die Strömungsverluste lassen sich auf diese Weise weiter reduzieren, ebenso die benötigte Menge an formstabilen porösen Körpern 7, 8. Dadurch kann die Effizienz der vorgeschlagenen Lösungsmethode weiter gesteigert bzw. die Herstellkosten gesenkt werden.

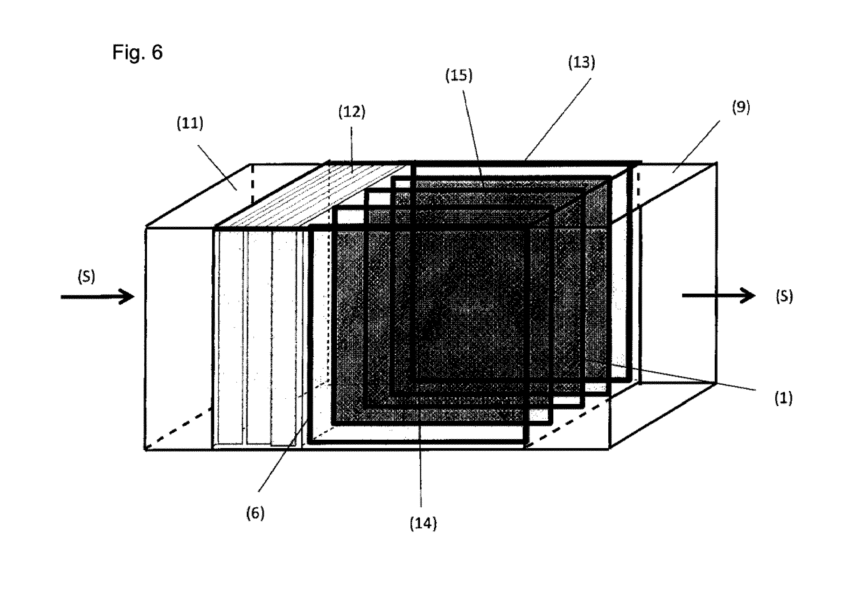

Fig. 6 ist schließlich ein beispielhaftes Filtersystem auf Basis des vorliegenden Lösungsvorschlages dargestellt, wobei dem kastenförmigen Feinfilterbereich 13 in dem die Feinfilterlagen 2 bzw. Feinfilterschichten 1 flächig gestapelt sind ein Vorfilter 12 vorgeschaltet ist, dessen Faserfilamente weniger dicht gepackt sind als in den Feinfilterschichten 1 und wo deshalb nur größere Partikel mit höherer Effizienz abgeschieden werden.

In der gezeigten Anordnung sind mehrere Filterschichten 1 parallel zu Filterlagen 2 angeordnet und ebenfalls parallel zu den seitlichen Gehäusewandungen 15 bzw. senkrecht zur oberen Gehäusewandung 16 ausgerichtet. Der Vorfilter 12 ist im oder am Ende des Zulaufkasten 11 untergebracht. Durch diesen wird der zu filternde Stoffstrom geführt, bevor dieser mit entsprechend geringerer Filtrat-Fracht auf die Faltenkanten 6 der Feinfilterpackung geleitet wird.

## Patentansprüche

1. Filtersystem, umfassend zumindest zwei Filterlagen (2), die sich zumindest bereichsweise überlappen, wobei die Filterlagen (2) aus zumindest einer Filterschicht (1) bestehen, welche Fasermaterial umfasst, **dadurch gekennzeichnet, dass** zwischen den Filterlagen (2) im Überlappungsbereich (14) wenigstens ein formstabiler poröser Körper (7, 8), der offenporig ausgebildet ist, eingebracht ist.

2. Filtersystem nach Anspruch 1, **dadurch gekennzeichnet, dass** zumindest Filterlagen (2) durch Falten einer Filterschicht (1) oder eines Verbunds an Filterschichten (1) zu Filterfaltenlagen (2) gebildet sind.

3. Filtersystem nach Anspruch 1 oder Anspruch 2, **dadurch gekennzeichnet, dass** der wenigstens eine formstabile poröse Körper (7, 8) derart ausgebildet ist, dass der Druckverlust bei Druckbeaufschlagung mit dem zu filternden Medium bei Integration der formstabilen porösen Körper (7, 8) nicht mehr als 10%, vorzugsweise nicht mehr als 5% im Vergleich zum Filtersystem ohne die formstabilen porösen Körper (7, 8) beträgt.

4. Filtersystem nach einem der Ansprüche 1 bis 4, **dadurch gekennzeichnet, dass** die mittlere Porengröße des formstabilen porösen Körpers (7, 8) um zumindest 100%, vorzugsweise um 100 - 500 %, größer als die mittlere Porengröße der Filterschichten (1) der Filterlage (2) ist.

5. Filtersystem nach einem der Ansprüche 1 bis 4, **dadurch gekennzeichnet, dass** der formstabile offenporige Körper (7, 8) entlang der Strömungsrichtung (s) des zu filternden Mediums eine inhomogene Porigkeit aufweist, wobei die mittlere Porengröße an der der stromaufwärts gelegenen Begrenzungsfläche des formstabilen offenporigen Körpers (7, 8) vorzugsweise eine mittlere Porengröße von 300 - 400 % der Porengröße der Filterlage (2) und an der stromabwärts gelegenen Begrenzungsfläche vorzugsweise eine mittlere Porengröße von 120 - 160 % der Porengröße der Filterlage (2) aufweist.

6. Filtersystem nach Anspruch 5, **dadurch gekennzeichnet, dass** die Abnahme der Porengröße von der stromaufwärts gelegenen Begrenzungsfläche zur stromabwärts gelegenen Begrenzungsfläche stetig, vorzugsweise linear, erfolgt.

7. Filtersystem nach Anspruch 6, **dadurch gekennzeichnet, dass** die Filterkenngröße (K), definiert durch das Verhältnis von der Filterfaltenbreite (B) zu Filterfaltenabstand (A) einen Wert größer als 10, vorzugsweise größer als 20 aufweist.

8. Filtersystem nach einem der Ansprüche 1 bis 7, **dadurch gekennzeichnet, dass** die Filterlagen (2) in einer im Wesentlichen ebenen Plattenstruktur geschichtet aufgebaut sind und die Anströmung und die Abströmung tangential zur Richtung der Plattenstruktur erfolgt, wobei die Strömungsrichtungen innerhalb des Plattensystems zueinander einen Winkel von größer 30°, vorzugsweise größer 60°, aufweisen, wobei die Filterlagen (2) durch formstabile offenporige Körper (7, 8) auf einen konstanten Abstand gehalten werden.

9. Filtersystem nach Anspruch 8, **dadurch gekennzeichnet, dass** die Filterlagen (2) im Wesentlichen parallel zur Strömungsrichtung des Stoffstroms (S) ausgereichtet sind, wobei die Breite der formstabilen porösen Körper (7, 8) etwa den zweifachen bis vierfachen Wert des Abstands (A) der Filterlagen (2) beträgt.

10. Filtersystem nach einem der Ansprüche 1 bis 9, **dadurch gekennzeichnet, dass** weiters ein Vorfilter (12) vorgesehen ist, welches in Strömungsrichtung (s) stromaufwärts der Filterlagen (2) angeordnet ist.

11. Filtersystem nach Anspruch 10, **dadurch gekennzeichnet, dass** der Vorfilter (12) stirnseitig zu Faltenkanten (6) am Eintritt zu den Filterlagen (2) angeordnet ist.

12. Filtersystem nach einem der Ansprüche 1 bis 11, **dadurch gekennzeichnet, dass** die Filterlagen (2) im Wesentlichen senkrecht innerhalb eines Filtergehäuses ausgerichtet sind.
